# EUROPEAN PATENT APPLICATION

(11) **EP 3 984 807 A1**
(43) Date of publication of application: **20.04.2022**
(21) Application number: 20821733.1
(22) Date of filing: 01.06.2020
(51) Int. Cl.: B60L 15/20, B60L 15/40, B61L 23/00, B61L 23/14, B60L 3/00

(54) **TRAIN CONTROL SYSTEM AND COMPUTER PROGRAM**

(30) Priority: 12.06.2019 JP 2019109236
(71) Applicant: Hitachi, Ltd., Tokyo 100-8280 (JP)
(72) Inventor: KITANI, Mitsuhiro, Tokyo 100-8280 (JP); IKEDA, Takahiro, Tokyo 100-8280 (JP); KOIKE, Jun, Tokyo 100-8280 (JP); MINE, Hiroshi, Tokyo 100-8280 (JP); IMAMOTO, Kenji, Tokyo 100-8280 (JP)
(74) Representative: MERH-IP Matias Erny Reichl Hoffmann Patentanwälte PartG mbB
(86) International application number: PCT/JP2020/021670
(87) International publication number: WO 2020/250741

(57) **Abstract**

To make it possible to perform appropriate obstacle sensing while the obstacle sensing is simplified. A train control system 1 includes: a train control apparatus 105 that is mounted on a train 101, and is configured to be able to communicate with a ground apparatus 103 located outside the train, and the train control apparatus 105 senses presence of an obstacle present at least around the train 101, and acquires first obstacle information related to the obstacle; manages the first obstacle information in a first format, and also manages second obstacle information related to the obstacle that is acquired from the ground apparatus 103, and is in a second format with an information amount smaller than the first format; and converts the second obstacle information in the second format into the first format, and senses the obstacle on a basis of the converted second obstacle information, and the first obstacle information.

## Description

### Technical Field

The present invention relates to a train control system, and a computer program.

### Background Art

By integrating sensing results obtained from a plurality of sensor apparatuses mounted on a plurality of trains, and performing obstacle sensing, a train control system that controls a train running on a railroad can acquire information about obstacles in areas which are outside an area where the subject train can perform sensing. This enables preparations for accident avoidance. As an example of such technologies, there are technologies disclosed in Patent Literature 1, and Patent Literature 2.

In the technology disclosed in Patent Literature 1, a train running on a track implements safety monitoring on a second track; in a case that the train senses an obstacle on a second track, the train transmits anomaly information related to the obstacle to a command center; on the basis of the transmitted anomaly information, the command center specifies, as a dangerous train, the next train to pass through a dangerous area which is in the second track, and has the obstacle therein, and transmits a warning to the dangerous train.

In addition, in the technology disclosed in Patent Literature 2, a system has: an in-railroad-obstacle detecting apparatus that senses in-railroad-obstacle information; a subject-train-state sensing apparatus that senses a subject train state; a railroad-line-related-information collecting apparatus that collects information related to a railroad line; an preceding-train-collected-information collecting apparatus that collects information from a preceding train; and a following train having mounted thereon a train-mounted control apparatus that takes in, and processes the in-railroad-obstacle information, the subject train state, the information related to the railroad line, and the information from the preceding train.

### Citation List

### Patent Literatures

Patent Literature 1: Japanese Patent Application No. 2006-273123
Patent Literature 2: Japanese Unexamined Patent Application Publication No. 2011-45207

### Summary of Invention

### Technical Problem

In Patent Literature 1 mentioned above, an anomaly on a track is specified on the basis of information about an obstacle detected by a non-subject train, and train control is implemented. Accordingly, there is a time lag between a time at which the information about the obstacle detected by the non-subject train is acquired, and a time at which the next train actually approaches the obstacle, and there is a possibility that control of train running is performed undesirably on the basis of the obstacle information even in a case that the obstacle actually does not become a hindrance to running of the train. That is, there is a possibility that the degree of reliability or importance of the information about the obstacle detected by the non-subject train lowers as time elapses, and there is a possibility that unnecessary train control occurs due to the application of the obstacle information.

In addition, according to Patent Literature 2, it is necessary to install a large number of in-railroad-obstacle detecting apparatuses around a railroad, and to process, at the train-mounted control apparatus, information about in-railroad obstacles sensed by those in-railroad-obstacle detecting apparatuses, for the purpose of enhancing the obstacle sensing precision. Accordingly, there is a possibility that the processing procedure at the train-mounted control apparatus of the following train becomes huger as a railroad to which the system is applied becomes longer.

The present invention is made in view of the problem described above, and is to provide a train control system, and a computer program that make it possible to perform appropriate obstacle sensing while the obstacle sensing is simplified.

### Solution to Problem

In order to solve the problem described above, a train control system according to one aspect of the present invention has a train control apparatus that is mounted on a train, and is configured to be able to communicate with an external apparatus located outside the train, and the train control apparatus senses presence of an obstacle present at least around the train, and acquires first obstacle information related to the obstacle; manages the first obstacle information in a first format, and also manages second obstacle information related to the obstacle that is acquired from the external apparatus, and is in a second format with an information amount smaller than the first format; and converts the second obstacle information in the second format into the first format, and senses the obstacle on a basis of the converted second obstacle information, and the first obstacle information.

### Advantageous Effects of Invention

According to the present invention, a train control system, and a computer program that make it possible to perform appropriate obstacle sensing while the obstacle sensing is simplified can be realized.

### Brief Description of Drawings

Fig. 1 is a figure depicting the functional configuration of a train control system according to a first embodiment.
Fig. 2 is a figure depicting the functional configuration of main sections of a train control apparatus according to the first embodiment.
Fig. 3 is a figure depicting an example of train-retained management object information in the first embodiment.
Fig. 4 is a figure depicting the functional configuration of main sections of a ground apparatus according to the first embodiment.
Fig. 5 is a figure depicting an example of entire-area object information in the first embodiment.
Fig. 6 is a flowchart depicting an example of operation of the train control apparatus according to the first embodiment.
Fig. 7 is a flowchart depicting an example of operation of the ground apparatus according to the first embodiment.
Fig. 8 is a flowchart depicting an example of obstacle information extraction in the train control apparatus according to the first embodiment.
Fig. 9 is a figure depicting an example of simplified obstacle information conversion, and sensor fusion in the first embodiment.
Fig. 10 is a flowchart depicting an example of obstacle information conversion at the ground apparatus according to the first embodiment.
Fig. 11 is a figure depicting an example of the obstacle information conversion at the first embodiment.
Fig. 12 is a figure depicting the functional configuration of the train control system according to a second embodiment.
Fig. 13 is a flowchart depicting an example of operation of the train control system according to the second embodiment.

### Description of Embodiments

Hereinafter, embodiments of the present invention are explained with reference to the figures. Note that the embodiments explained below do not limit the invention according to claims, and it is not always the case that all of elements and combinations thereof explained in the embodiments are essential for the solutions of the invention.

A train control system of the present embodiments has a configuration like the one mentioned next, for example. In order to reduce time required for preprocessing, on a train, of second obstacle information which is retained by a ground apparatus as an example of an external apparatus, and is obstacle sensing information of all trains, coordinate approximation (e.g. conversion of two-dimensional coordinates into a one-dimensional coordinate) of an obstacle based on operation management information is performed in accordance with importance, and additionally a plurality of pieces of second obstacle information about obstacles within a predetermined area (e.g. blocks in a railway block system or an area between stations) are integrated to generate simplified second obstacle information which is then provided to each train. On the basis of the provided second obstacle information, and the running position of itself, a train control apparatus mounted on each train specifies obstacle information that should be applied, and performs necessary train control. In addition, in order to eliminate noise, and errors of the second obstacle information, the second obstacle information is converted into a data format that can be probabilistically integrated with first obstacle information about an obstacle sensed by a sensor which is a sensing section mounted on a train, and sensor fusion of the obstacle information is implemented.

Here, sensor fusion means performing various types of sensing by combining results of sensing of typically a plurality of sensors, preferably a plurality of sensors that output results of sensing in their unique formats, but in the present specification, in addition to this definition, sensor fusion also means probabilistically integrating the results of sensing of the plurality of sensors. Such integration is called sensor fusion, hereinafter.

Note that, in the present specification, "information," and "data" have the same meaning, and are used without particular distinctions being made therebetween. In addition, in a case that "information," and "data" are mentioned, the numbers of pieces of the "data," and "information" are not limited to any particular number. Furthermore, the formats of the "data," and "information" are not limited to any particular format. Besides, data or the like that is kept or stored on a storage medium in a so-called table format is also "information," and "data" mentioned here.

### First Embodiment

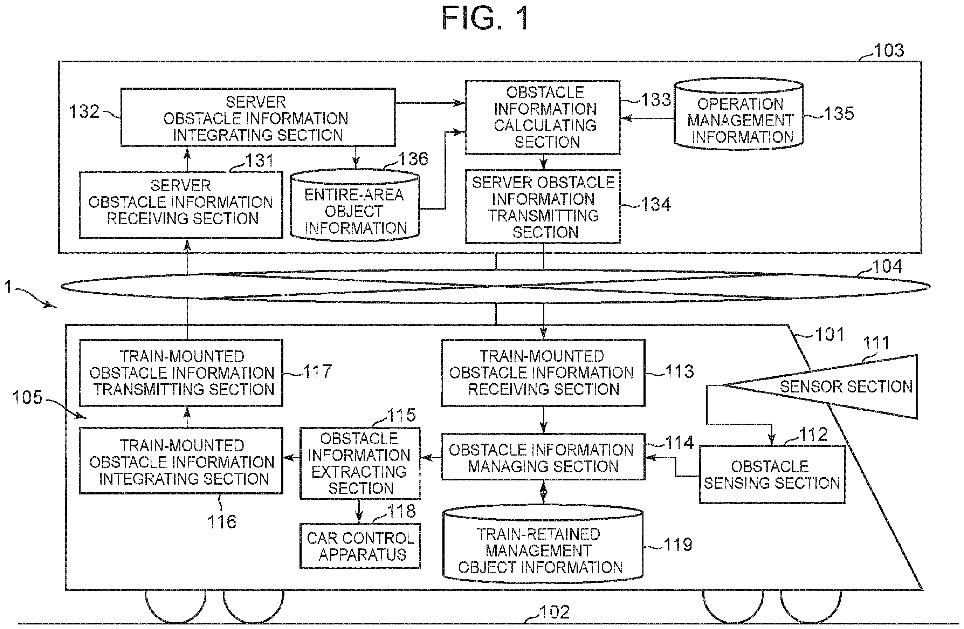

Fig. 1 is a figure depicting the functional configuration of a train control system according to a first embodiment.

A train control system 1 of the present embodiment has at least: a train control apparatus 105 mounted on a train 101 running on a track 102; a ground apparatus (external apparatus) 103 provided outside the train 101; a ground-train interface 104 that is configured to make the train control apparatus 105 and the ground apparatus 103 able to communicate with each other. Note that whereas only one train 101, and train control apparatus 105 are depicted in Fig. 1, the numbers of them are not restricted.

These train control apparatus 105, and ground apparatus 103 both include an apparatus capable of various types of information processing, for example, an information processing apparatus such as a computer. The information processing apparatus has a computing element, storage media and a communication interface, and further has, as necessary, input apparatuses such as a mouse or a keyboard, and a display apparatus such as a display.

For example, the computing element is a CPU (Central Processing Unit), an FPGA (Field-Programmable Gate Array) or the like. For example, the storage media have a magnetic storage medium such as an HDD (Hard Disk Drive), a semiconductor storage medium such as a RAM (Random Access Memory), a ROM (Read Only Memory) or an SSD (Solid State Drive), and the like. In addition, a combination of an optical disk drive and an optical disc such as a DVD (Digital Versatile Disk) is also used as a storage medium. Other than these, a known storage medium such as a magnetic tape medium is also used as a storage medium.

The storage media have programs such as firmware stored thereon. At the start of operation of the train control apparatus 105 or the like (e.g. when the power supply is turned on), the programs such as firmware are read out from the storage media, and are executed, and the overall control of the train control apparatus 105, and the like is performed. In addition, other than the programs, the storage media have data, and the like necessary for each process of the train control apparatus 105 or the like stored thereon.

The train control apparatus 105 has a sensor section 111, an obstacle sensing section 112, a train-mounted obstacle information receiving section 113, an obstacle information managing section 114, an obstacle information extracting section 115, a train-mounted obstacle information integrating section 116, a train-mounted obstacle information transmitting section 117, a car control apparatus 118, and train-retained management object information 119.

The sensor section 111 implements sensing of an obstacle on, and around the track 102 positioned in the advancing direction of the train 101, and outputs first obstacle information related to the obstacle. The obstacle sensing section 112 receives the first obstacle information output by the sensor section 111, and outputs obstacle analysis results of the first obstacle information.

The train-mounted obstacle information receiving section 113 receives, through the ground-train interface 104, results of conversion of second obstacle information managed by the ground apparatus 103 in a first format into a second format. The obstacle information managing section 114 manages the obstacle analysis results output by the obstacle sensing section 112, and the second obstacle information in the second format received by the train-mounted obstacle information receiving section 113, and provides the obstacle information to the obstacle information extracting section 115.

On the basis of the running position of the train 101, the obstacle information extracting section 115 chooses obstacle information to be applied, from the obstacle information received from the obstacle information managing section 114, and converts a running control instruction, and the obstacle information into a format in which sensor fusion of the running control instruction, and the obstacle information is possible. On the basis of the obstacle information chosen by the obstacle information extracting section 115, the train-mounted obstacle information integrating section 116 implements sensor fusion of the obstacle information. The train-mounted obstacle information transmitting section 117 transmits, to the ground apparatus 103 through the ground-train interface 104, integrated obstacle information output by the sensor fusion by the train-mounted obstacle information integrating section 116.

The car control apparatus 118 receives the running control instruction output by the obstacle information extracting section 115, and implements control of the train 101. Typically, the car control apparatus 118 controls running of the train 101 by controlling the running speed of the train 101, but may control running of the train 101 by controlling the acceleration.

The train-retained management object information 119 retains the first obstacle information about obstacles specified by the train control apparatus 105 itself, and the second obstacle information received from the ground apparatus 103. Details of the train-retained management object information 119 are mentioned later.

The ground apparatus 103 manages obstacle information of all trains 101 that are running currently, and have a train control apparatus 105. The ground apparatus 103 has a server obstacle information receiving section 131, a server obstacle information integrating section 132, an obstacle information calculating section 133, a server obstacle information transmitting section 134, operation management information 135, and entire-area object information 136.

The server obstacle information receiving section 131 receives integrated obstacle information output from trains 101 through the ground-train interface 104. The server obstacle information integrating section 132 implements sensor fusion of the obstacle information that is received by the server obstacle information receiving section 131, and is from the trains 101 running in an area that the ground apparatus 103 is in charge of, and manages integrated obstacle information output as a result of the sensor fusion by using the entire-area object information 136.

By using data retained in the operation management information 135, and the entire-area object information 136, the obstacle information calculating section 133 implements conversion of obstacle information that destination-of-transmission trains 101 need from the first format to the second format. The server obstacle information transmitting section 134 transmits the second obstacle information in the second format output by the obstacle information calculating section 133 to all cars such as trains 101 that are running in the area.

The operation management information 135 retains operation information of cars such as trains 101 in the area that the ground apparatus 103 itself is in charge of. The entire-area object information 136 retains sensor fusion results of obstacle information received from all trains 101 running in the area, and importance definitions of the obstacle information. Details of the entire-area object information 136 are mentioned later.

The ground-train interface 104 is an interface that makes train control apparatuses 105 and the ground apparatus 103 able to communicate information with each other. Examples of the ground-train interface 104 include a combination of a ground communication system such as a WAN (Wide Area Network) represented by the Internet, and a wireless communication system such as a mobile body communication system or a train wireless system that performs communication with moving trains 101.

Here, the sensor section 111 included in a train 101 may include a plurality of sensors (monocular cameras, millimeter wave radar, etc.). In addition, whereas it is supposed in the present embodiment that obstacle information of all trains 101 is managed by the ground apparatus 103, the train control apparatus 105 of a particular train 101 may implement the role, or provision of obstacle information may be implemented between train control apparatuses 105.

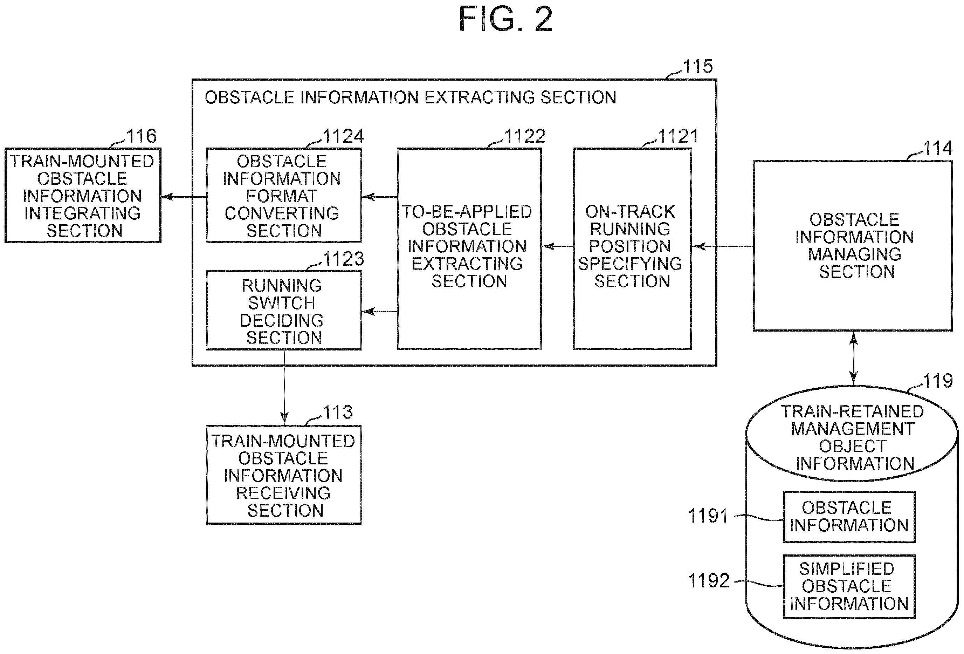

Fig. 2 is a figure depicting the functional configuration of main sections of a train control apparatus 105 according to the first embodiment.

More specifically, Fig. 2 is a figure of a configuration which is in the obstacle information extracting section 115 in a train 101, and is for specifying obstacle information to be applied to sensor fusion of the present invention, and converting the data format of the simplified obstacle information by using obstacle information 1191, and simplified obstacle information 1192 retained in the train-retained management object information 119.

The obstacle information extracting section 115 has an on-track running position specifying section 1121, a to-be-applied obstacle information extracting section 1122, a running switch deciding section 1123, and an obstacle information format converting section 1124. In addition, the train-retained management object information 119 has the obstacle information 1191, which is first obstacle information, and the simplified obstacle information 1192, which is second obstacle information.

The on-track running position specifying section 1121 specifies the running position of the subject train 101 on the basis of the obstacle information 1191 in the train-retained management object information 119, and schedule information of the subject train 101, and running information of the subject train 101, both of which are not depicted in figures. In addition, the on-track running position specifying section 1121 transmits, to the to-be-applied obstacle information extracting section 1122, the obstacle information 1191, and simplified obstacle information 1192 retained in the train-retained management object information 119, and the specified running position information.

On the basis of the running position information received from the on-track running position specifying section 1121, the to-be-applied obstacle information extracting section 1122 extracts obstacle information to be applied. Then, in a case that there is information that necessitates running control in the extracted obstacle information, the to-be-applied obstacle information extracting section 1122 transmits the running position information, and the relevant obstacle information to the running switch deciding section 1123. In addition, the to-be-applied obstacle information extracting section 1122 transmits all extracted pieces of obstacle information to the obstacle information format converting section 1124.

When having received the running position information, and obstacle information from the to-be-applied obstacle information extracting section 1122, the running switch deciding section 1123 decides, on the basis of the information, whether or not running control of the train 101 is necessary, and transmits a running control instruction to the car control apparatus 118 in a case that it is decided that running control is necessary.

The obstacle information format converting section 1124 converts the simplified obstacle information 1192 in all pieces of the obstacle information received from the to-be-applied obstacle information extracting section 1122 into a data format in which sensor fusion based on a probability distribution is possible. Thereafter, all pieces of the obstacle information 1191, and the simplified obstacle information 1192 having been converted into the format in which sensor fusion is possible are transmitted to the train-mounted obstacle information integrating section 116.

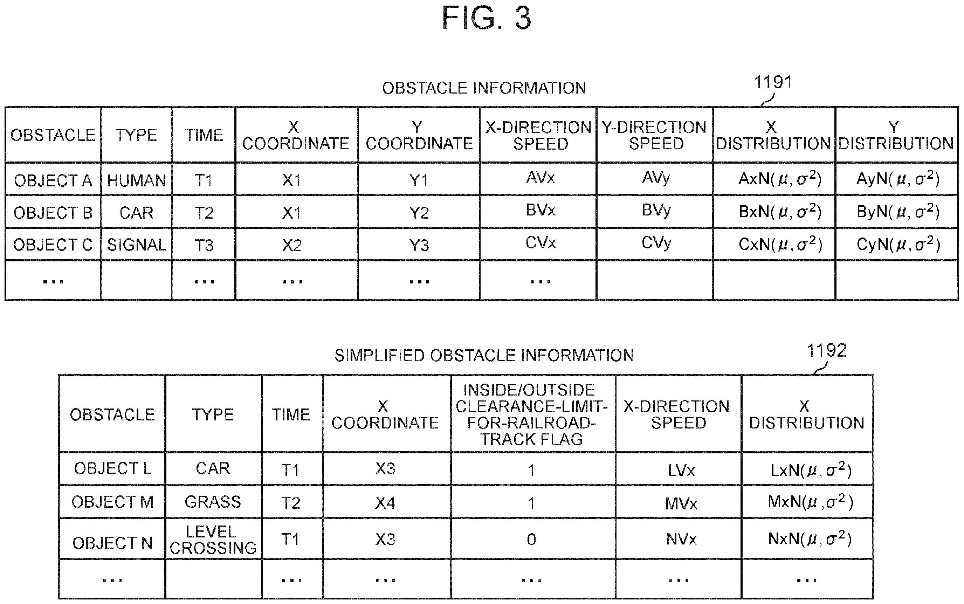

Fig. 3 is a figure depicting an example of the train-retained management object information 119 in the first embodiment.

As depicted in Fig. 2 and Fig. 3, the train-retained management object information 119 has the obstacle information 1191, and the simplified obstacle information 1192.

The obstacle information 1191 is obstacle information including: the type of an obstacle detected by the sensor section 111, and obstacle sensing section 112 of the train 101; a sensing time; and two-dimensional obstacle position information. The simplified obstacle information 1192 is information that is received from the ground apparatus 103, and is obtained by simplifying second obstacle information about obstacles sensed by non-subject trains into one-dimensional (second-format) sensing position information.

Note that whereas the train-retained management object information 119 retains the obstacle information 1191, and 1192 in the example described in the present embodiment, retained data other than the obstacle information 1191, which is two-dimensional obstacle position information, may be changed as desired. In addition, whereas the simplified obstacle information 1192 retains an inside/outside clearance-limit-for-railroad-track flag, and manages, as one-bit information, whether there is an obstacle inside or outside a clearance limit for railroad track, such identification does not necessarily have to be done by using one-bit information, but a range where there is an obstacle may be managed.

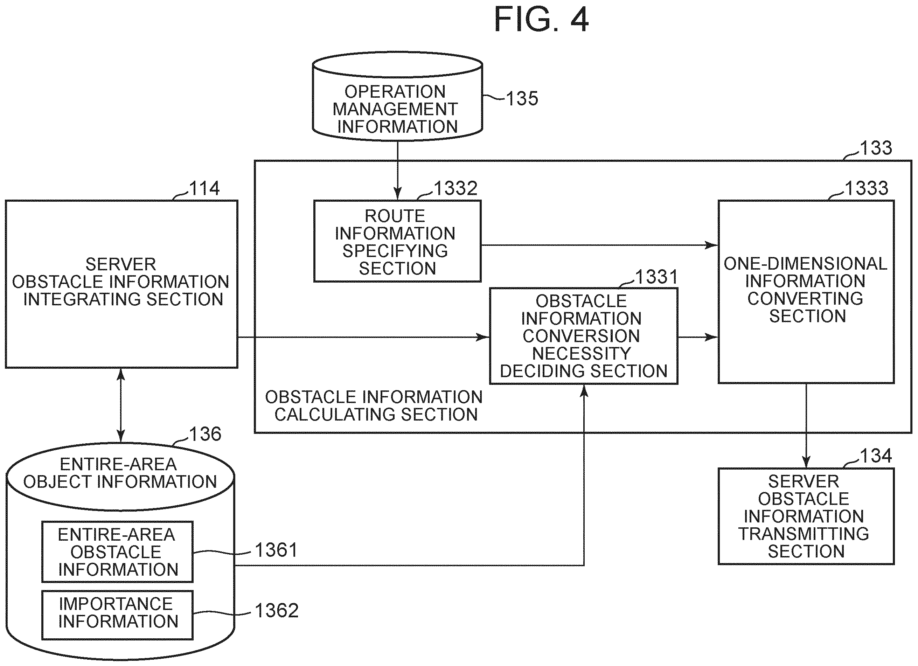

Fig. 4 is a figure depicting the functional configuration of main sections of the ground apparatus 103 according to the first embodiment.

The obstacle information calculating section 133 specifies obstacle information to be converted into simplified obstacle information 1192, and converts the specified obstacle information into a one-dimensional data format, by using entire-area obstacle information 1361, and importance information 1362 retained in the entire-area object information 136.

The obstacle information calculating section 133 has an obstacle information conversion necessity deciding section 1331, a route information specifying section 1332, and a one-dimensional information converting section 1333.

After the entire-area object information 136 is updated to the latest state by the server obstacle information integrating section 132, the obstacle information conversion necessity deciding section 1331 calculates, on the basis of the importance information 1362, the importance of each of all pieces of obstacle information in the entire-area obstacle information 1361 retained in the entire-area object information 136, and specifies obstacle information having importance which is equal to or lower than a set predetermined threshold. In addition, the obstacle information conversion necessity deciding section 1331 transmits all pieces of the obstacle information to the one-dimensional information converting section 1333.

On the basis of the operation management information 135 that the ground apparatus 103 has, and retains operation management information of all trains 101 running in the management area, the route information specifying section 1332 specifies the running areas of all the trains 101, and transmits information about the specified running areas to the one-dimensional information converting section 1333.

On the basis of the obstacle information received from the obstacle information conversion necessity deciding section 1331, and the running area information of all the trains 101 received from the route information specifying section 1332, the one-dimensional information converting section 1333 specifies obstacle information that should be transmitted to all the trains 101, also converts, into one-dimensional information, the obstacle information specified by the obstacle information conversion necessity deciding section 1331 as having importance which is equal to or lower than the predetermined threshold, and then transmits, to the server obstacle information transmitting section 134, all pieces of the specified obstacle information that should be transmitted.

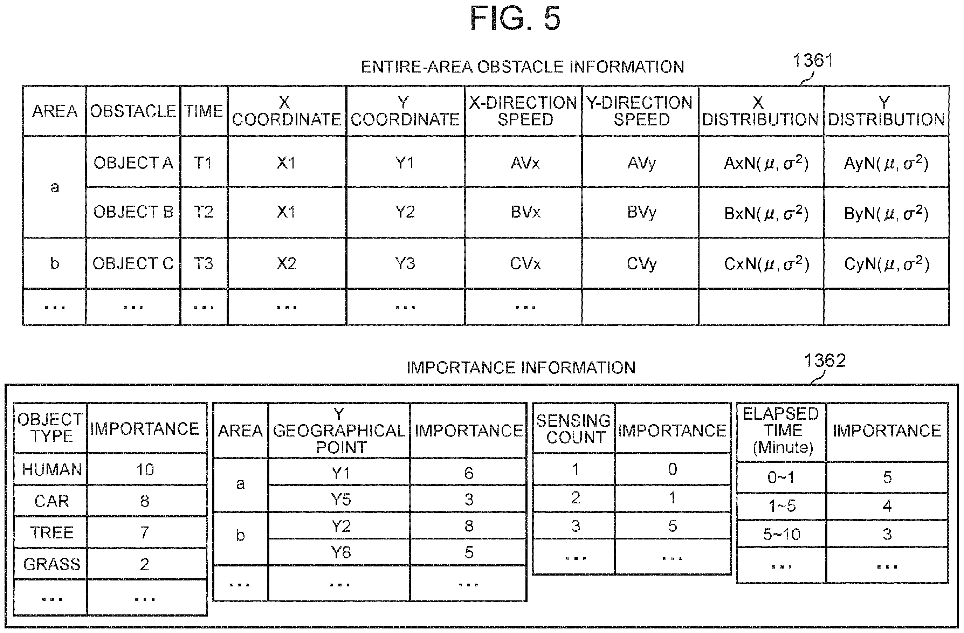

Fig. 5 is the structure of data that the entire-area object information 136 has.

As depicted in Fig. 4, and Fig. 5, the entire-area object information 136 has the entire-area obstacle information 1361, and the importance information 1362.

The entire-area obstacle information 1361 is information including: integrated obstacle information obtained by integrating obstacle information received from cars such as trains 101 running in the entire area; and area information given to the integrated obstacle information.

The importance information 1362 is importance definition information that is defined for object types, geographical points, sensing counts, and elapsed time, and is used for a conversion necessity decision at the obstacle information conversion necessity deciding section 1331 that the obstacle information calculating section 133 has.

Note that whereas it is supposed in the present embodiment that the importance information 1362 includes object types, geographical points, sensing counts, and elapsed time, another index such as the magnitude represented by velocity information or velocity data (the larger a vector is, the lower the reliability (importance) is), for example, may be adopted as information included in the importance information 1362, in addition to the indices depicted in Fig. 5. In addition, whereas it is supposed that the importance information 1362 is static data for the entire area, the importance information may be changed for each area, and may be reset dynamically.

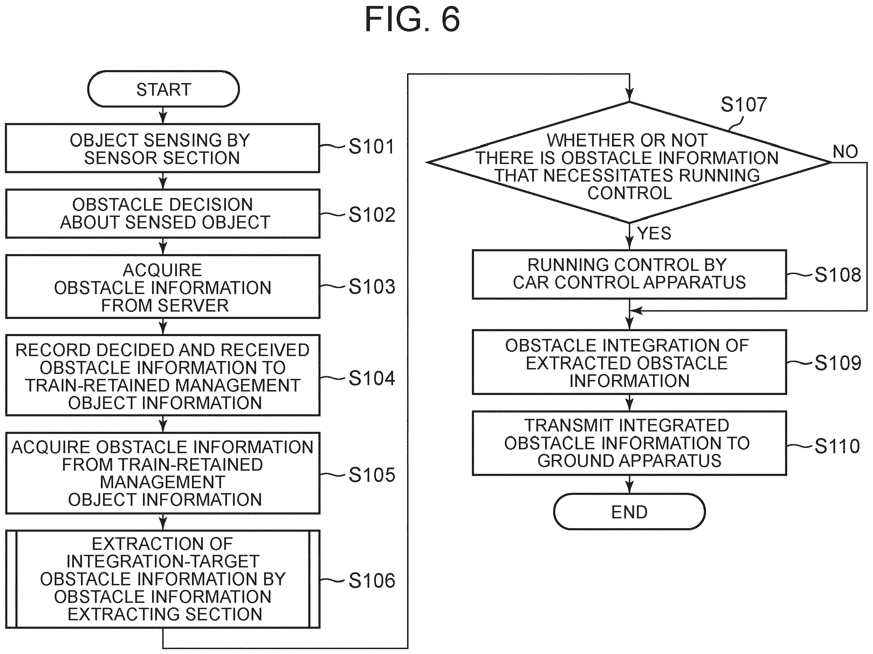

Fig. 6 is a flowchart depicting an example of operation of the train control apparatus 105 according to the first embodiment. The flowchart depicted in Fig. 6 depicts the whole processing procedure for obstacle sensing at a train control apparatus 105.

First, the sensor section 111 installed on a train 101 implements obstacle sensing, and transmits information about detected obstacles to the obstacle sensing section 112 (S101). The obstacle sensing section 112 having received the obstacle information implements obstacle decision about all pieces of the obstacle information, and transmits, to the obstacle information managing section 114, information about obstacles decided as obstacles (S102).

The obstacle information managing section 114 acquires simplified obstacle information transmitted from the ground apparatus 103 (S103), and records the acquired obstacle information, and simplified obstacle information in the obstacle information 1191, and simplified obstacle information 1192 retained in the train-retained management object information 119 (S104). Next, the obstacle information managing section 114 acquires the obstacle information 1191, and the simplified obstacle information 1192 from the train-retained management object information 119, and transmits the obstacle information 1191, and the simplified obstacle information 1192 to the obstacle information extracting section 115 (S105).

On the basis of the running position of the subject train 101, the obstacle information extracting section 115 having received the obstacle information 1191, and the simplified obstacle information 1192 extracts sensor-fusion-target obstacle information (S106), and decides whether or not there is obstacle information that is included in the extracted obstacle information, and necessitates implementation of running control (S107).

In a case that it is decided that there is obstacle information that necessitates implementation of running control (YES at S107), the obstacle information extracting section 115 gives a running control instruction to the car control apparatus 118, and the car control apparatus 118 implements car control (S108).

In a case that it is decide that there is no obstacle information that necessitates running control or after the running control instruction is given to the car control apparatus 118, the obstacle information extracting section 115 transmits the extracted obstacle information to the train-mounted obstacle information integrating section 116. The train-mounted obstacle information integrating section 116 having received the extracted obstacle information implements sensor fusion on the obstacle information, creates integrated obstacle information (S109), and transmits the created integrated obstacle information to the ground apparatus (S110).

The process depicted in the flowchart of Fig. 6 is implemented repeatedly at predetermined intervals while the train 101 is running.

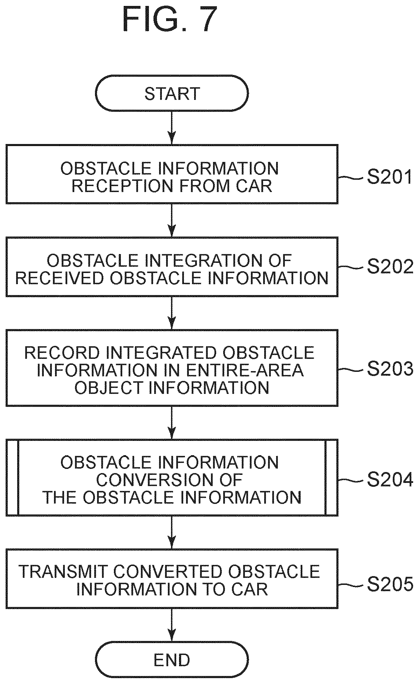

Fig. 7 is a flowchart depicting an example of operation of the ground apparatus 103 according to the first embodiment. The flowchart depicted in Fig. 7 depicts the whole processing procedure for obstacle information management by the ground apparatus 103.

First, the server obstacle information receiving section 131 receives obstacle information from all trains 101 running in the management area, and transmits the obstacle information to the server obstacle information integrating section 132 (S201).

The server obstacle information integrating section 132 having received the obstacle information from all the trains 101 implements sensor fusion on the obstacle information to create integrated obstacle information (S202), records the created integrated obstacle information in the entire-area obstacle information 1361 retained in the entire-area object information 136, and notifies the obstacle information calculating section 133 that the entire-area obstacle information 1361 has been updated (S203).

The obstacle information calculating section 133 having received the update notification extracts obstacle information to be transmitted to all the trains 101 from the entire-area obstacle information 1361 on the basis of the operation management information 135, and the importance information 1362 retained in the entire-area object information 136, and converts the obstacle information into one-dimensional information (S204). The server obstacle information transmitting section 134 receives the obstacle information converted into the one-dimensional information, and transmits the obstacle information converted into the one-dimensional information to all the trains 101 running in the management area (S205).

The process depicted in the flowchart of Fig. 7 is implemented repeatedly at predetermined intervals while the ground apparatus 103 is activated.

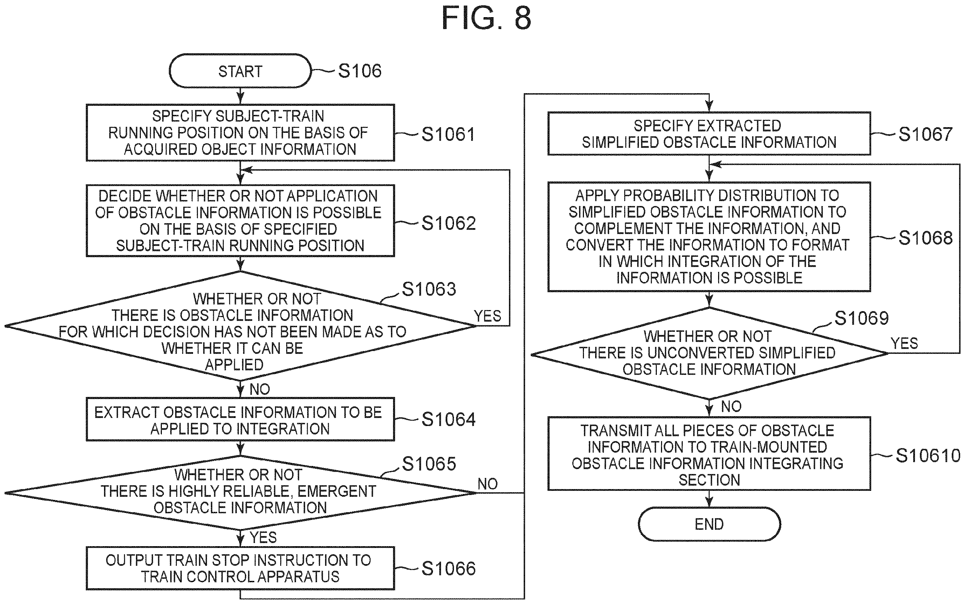

Fig. 8 is a flowchart depicting an example of obstacle information extraction in the train control apparatus 105 according to the first embodiment. The flowchart depicted in Fig. 8 depicts a detailed to-be-applied-obstacle extracting procedure by the obstacle information extracting section 115 which is the process at S106 in the flowchart of Fig. 6.

First, on the basis of the obstacle information 1191 retained in the train-retained management object information 119, and running record information of the train 101 retained by itself, the on-track running position specifying section 1121 implements a process for specifying the running position of the subject train 101 (S1061). Then, the on-track running position specifying section 1121 sends information about the specified running position to the to-be-applied obstacle information extracting section 1122.

On the basis of the received information about the running position of the subject train 101, the to-be-applied obstacle information extracting section 1122 having received the running position information implements determination of deciding obstacle information to be applied from the obstacle information 1191, and simplified obstacle information 1192 stored in the train-retained management object information 119 (S1062).

Then, the to-be-applied obstacle information extracting section 1122 checks whether or not there is obstacle information, and simplified obstacle information for which the determination at S1062 should be implemented (S1063), and, in a case that there is obstacle information for which the determination should be implemented (YES at S1063), repeatedly executes the process at S1062 until there is no more obstacle information for which the determination should be implemented (NO at S1063).

In a case that there is no obstacle information for which the determination should be implemented, the to-be-applied obstacle information extracting section 1122 extracts all pieces of obstacle information, and simplified obstacle information that are decided to be applied (S1064). Then, the to-be-applied obstacle information extracting section 1122 checks whether or not the extracted obstacle information includes highly reliable obstacle information that requires emergent handling (S1065).

In a case that there is obstacle information that requires emergent handling (YES at S1065), the to-be-applied obstacle information extracting section 1122 transmits the obstacle information that requires emergent handling to the running switch deciding section 1123, and the running switch deciding section 1123 decides running control on the basis of the received obstacle information, and transmits a running control instruction to the car control apparatus 118 (S1066).

In a case that there is no obstacle information that requires emergent handling (NO at S1065) or after the completion of the process at S1066, the to-be-applied obstacle information extracting section 1122 transmits the extracted obstacle information, and simplified obstacle information to the obstacle information format converting section 1124. The obstacle information format converting section 1124 having received the obstacle information, and the simplified obstacle information specifies all pieces of the simplified obstacle information (S1067).

Then, the obstacle information format converting section 1124 applies, to the specified simplified obstacle information, information calculated from probability distributions as complementary information of the simplified obstacle information, and converts the simplified obstacle information into a data format having two-dimensional information in which sensor fusion of the simplified obstacle information, and the obstacle information is possible (S1068).

The obstacle information format converting section 1124 checks whether or not there is simplified obstacle information for which conversion should be implemented (S1069), and, in a case that there is simplified obstacle information for which conversion should be implemented (YES at S1069), the obstacle information format converting section 1124 repeatedly executes S1068 until there is no more obstacle information for which conversion should be implemented. In a case that there is no obstacle information for which conversion should be implemented (NO at S1069), the obstacle information format converting section 1124 transmits all pieces of the obstacle information having been converted into the two-dimensional information to the train-mounted obstacle information integrating section 116 (S10610).

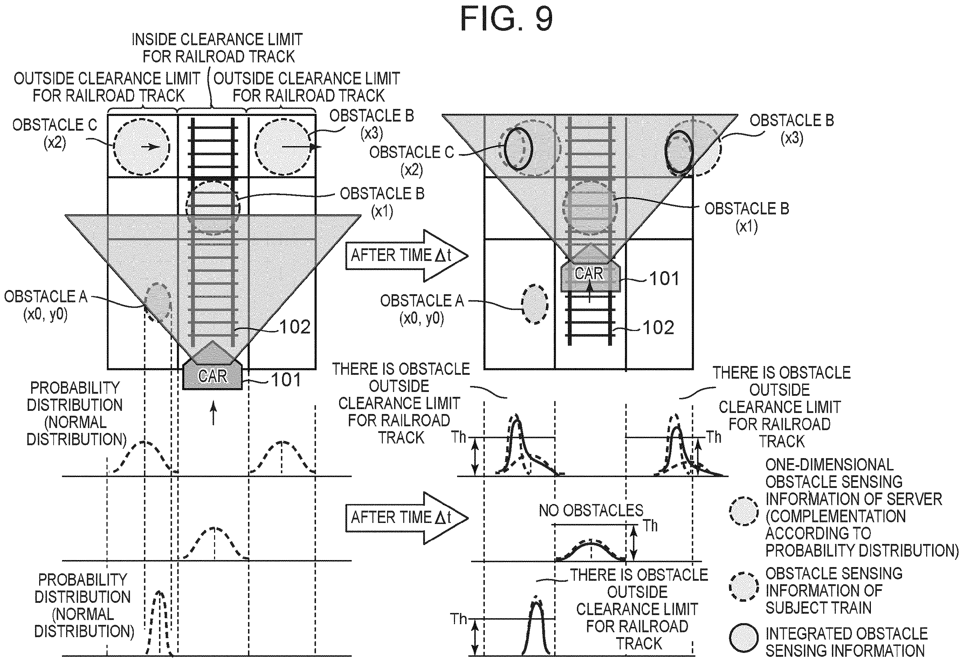

Fig. 9 is a figure depicting an example of simplified obstacle information conversion, and sensor fusion in the first embodiment. More specifically, Fig. 9 is an example of results of simplified obstacle information two-dimension conversion, and sensor fusion using probability distributions implemented by the obstacle information format converting section 1124, and the train-mounted obstacle information integrating section 116.

By applying probability distributions to the simplified obstacle information received from the ground apparatus 103 on a train 101 that is running on the track 102 while implementing obstacle sensing by using the sensor section 111, it is possible to convert the simplified obstacle information into two-dimensional approximation obstacle information by calculating, from one-dimensional information of an obstacle located outside the detection range of the subject train 101, a range where there is the obstacle.

Thresholds in terms of degrees of reliability are set in order to cope with obstacle information whose reliability lowers as time elapses, the conversion is implemented at obstacle sensing intervals, and the variance at the time of the conversion is increased as time elapses. Thereby, information whose reliability is low can be excluded from sensor fusion.

In addition, in a case that an obstacle is sensed in an area close to an area represented by simplified obstacle information received by a car after a lapse of a predetermined length of time, by integrating probability distributions of the simplified obstacle information obtained by the conversion, and information about the obstacle sensed by the subject car, it is possible to eliminate noise, and errors of the obstacle information, and to enhance the obstacle sensing precision as a result.

Here, the manner of giving probability distributions may be a well-known manner, but, as an example, it is preferred to give probability distributions by using a Kalman filter.

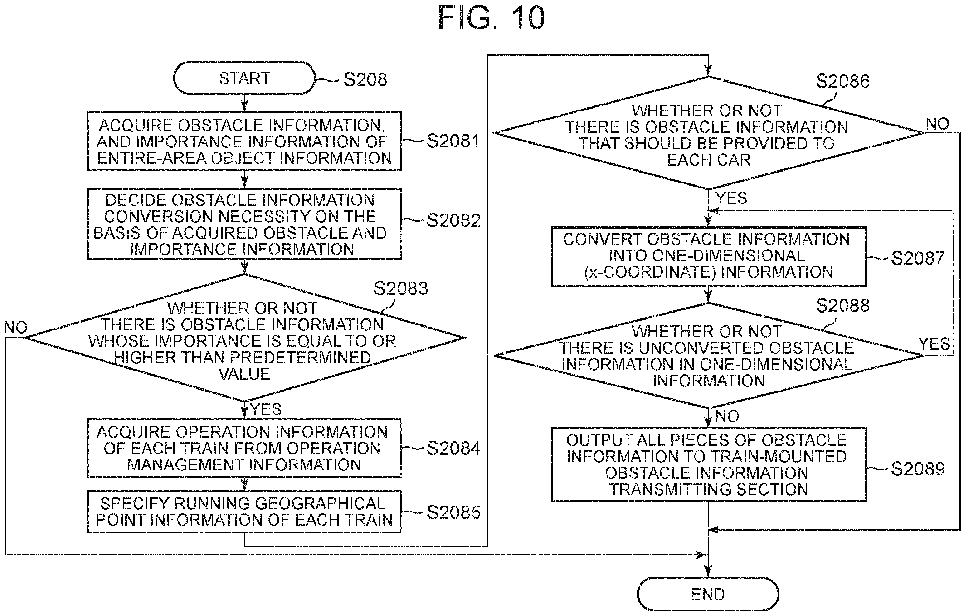

Fig. 10 is a flowchart depicting an example of obstacle information conversion at the ground apparatus 103 according to the first embodiment. The flowchart depicted in Fig. 10 depicts a detailed to-be-applied-obstacle extracting procedure by the obstacle information calculating section 133 which is the process at S204 in the flowchart of Fig. 7.

First, when having received an update notification about the entire-area object information 136 from the server obstacle information integrating section 132, the obstacle information conversion necessity deciding section 1331 acquires the entire-area obstacle information 1361, and importance information 1362 retained in the entire-area object information 136 (S2081).

Next, the obstacle information conversion necessity deciding section 1331 calculates the importance of each of all pieces of the obstacle information in the acquired entire-area obstacle information 1361, and importance information 1362, and decides obstacle information conversion necessity on the basis of a set predetermined importance threshold (S2082).

As a result, the obstacle information conversion necessity deciding section 1331 checks whether or not there is obstacle information whose calculated importance exceeds the importance threshold (S2083), and, in a case that there is obstacle information whose importance exceeds the importance threshold (YES at S2083), the obstacle information conversion necessity deciding section 1331 transmits, to the one-dimensional information converting section 1333, all pieces of obstacle information whose importance exceeds the importance threshold. On the other hand, in a case that there is no obstacle information whose importance exceeds the importance threshold (NO at S2083), the extraction is ended.

The one-dimensional information converting section 1333 having received the obstacle information requests the route information specifying section 1332 to specify the running positions of all cars running in the management area, and the route information specifying section 1332 having received the request acquires operation information of each train 101 from the operation management information 135 (S2084), specifies the running position information of each train 101 from the acquired operation information, and transmits the running position information to the one-dimensional information converting section 1333 (S2085).

On the basis of the positional relationship between the obstacle information, and running position information of each train 101 received at S2083, and S2085, the one-dimensional information converting section 1333 checks whether or not there is obstacle information that should be provided to the trains 101 (S2086). In a case that there is no obstacle information that should be provided to cars (NO at S2086), the extraction is ended.

In a case that there is obstacle information that should be provided to the trains 101 (YES at S2086), the one-dimensional information converting section 1333 converts obstacle information having relevant two-dimensional information into simplified obstacle information including only one-dimensional information (S2087).

Next, the one-dimensional information converting section 1333 checks whether or not there is obstacle information for which conversion into one-dimensional information should be implemented (S2088), and in a case that there is obstacle information for which conversion should be implemented (YES at S2088), the one-dimensional information converting section 1333 repeatedly executes S2087 until there is no more obstacle information for which conversion should be implemented. Then, in a case that there is no obstacle information for which conversion should be implemented (NO at S2088), the one-dimensional information converting section 1333 transmits, to the server obstacle information transmitting section 134, all pieces of simplified obstacle information converted into one-dimensional information (S1064).

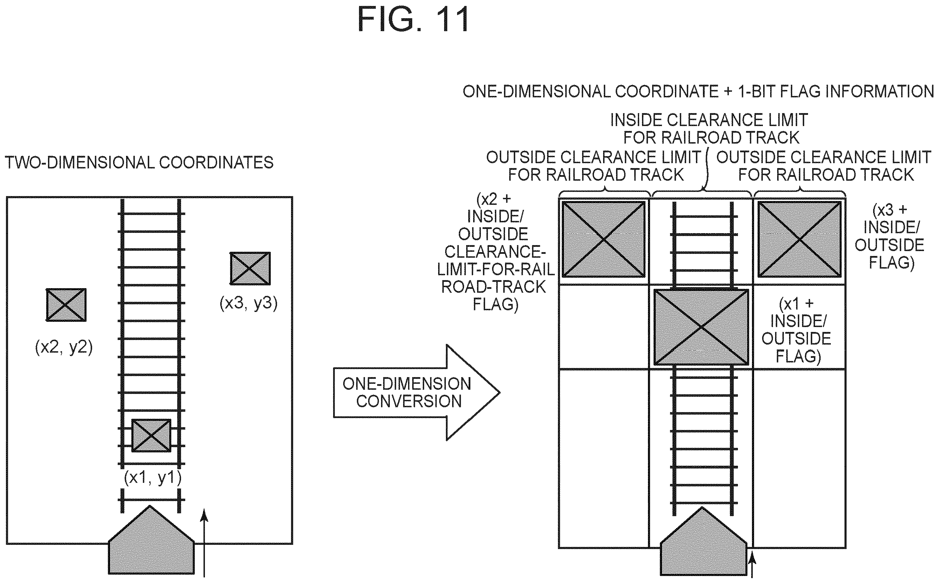

Fig. 11 is a figure depicting an example of the obstacle information conversion in the first embodiment. More specifically, Fig. 11 is an example of one-dimension conversion of two-dimensional obstacle information implemented by the one-dimensional information converting section 1333.

It is supposed that there are three obstacles that are decided as obstacles by a train 101 running on the track 102 while implementing obstacle sensing by using the sensor section 111, and the positional information of the three obstacles represent (x₁, y₁), (x₂, y₂), and (x₃, y₃). It is supposed here that Y axis is set as an axis that lies along the direction in which the track 102 extends, that is, along the running direction of the train 101, and the forward direction of the running direction of the train 101 is the positive direction. Similarly, it is supposed that X axis is set such that it lies along a direction orthogonal to the track 102, and the rightward direction of the train 101 is the positive direction.

The obstacle information related to the three obstacles is transmitted from the train 101 to the ground apparatus 103, and is stored in the entire-area obstacle information 1361 retained in the entire-area object information 136. In a case that the one-dimensional information converting section 1333 converts these pieces of information into one-dimensional information, their information related to Y coordinates is removed, and instead a 1-bit flag representing whether there is an obstacle inside or outside a clearance limit for railroad track is given to thereby create simplified obstacle information with a smaller amount of information.

Note that whereas 1-bit flags representing whether there are obstacles inside or outside a clearance limit for railroad track are given in the present embodiment, they do not have to be given necessarily. In addition, it is also possible to give information other than 1-bit flags representing whether there are obstacles inside or outside a clearance limit for railroad track.

According to the thus-configured present embodiment, the train control apparatus 105 senses the presence of an obstacle present at least around the train, and acquires first obstacle information related to the obstacle; manages the first obstacle information in a two-dimensional format which is a first format, and also manages second obstacle information (simplified obstacle information) that is acquired from the ground apparatus 103, and is in a one-dimensional format which is a second format with an information amount smaller than the first format; and converts the second obstacle information into the two-dimensional format, and senses the obstacle on the basis of the converted second obstacle information, and the first obstacle information.

Accordingly, according to the present embodiment, it becomes possible to perform appropriate obstacle sensing while the obstacle sensing is simplified.

More specifically, in the present embodiment, when the ground apparatus 103 provides, to each train 101, the second obstacle information that is retained in the entire-area object information 136, and is about obstacles detected by all trains 101, the obstacle information calculating section 133 converts the second obstacle information into the second format which is one-dimensional information, and provides information that each train 101 needs. Thereby, a length of time required for each train 101 to specify information necessary for the subject train 101 can be reduced, as compared to the second obstacle information about obstacles detected by other trains 101.

In addition, because the obstacle information calculating section 133 of the ground apparatus 103 sets importance definitions of the second obstacle information, and provides only second obstacle information whose importance is high to each train 101, it is possible to reduce the amount of information provided to the train 101, and additionally to enhance the sensing precision. Thereby, an enhancement of the safety of trains can be expected.

In addition, when a train 101 implements sensor fusion at the train-mounted obstacle information integrating section 116, the obstacle information extracting section 115 converts the simplified obstacle information (second obstacle information) 1192 retained in the train-retained management object information 119 into approximation two-dimensional obstacle information on which sensor fusion can be performed by using probability distributions, and the sensor fusion of obstacle information including the converted obstacle information is implemented. Thereby, it is possible to eliminate noise, and errors of the obstacle information, and to enhance the obstacle sensing precision.

### Second Embodiment

In a second embodiment, on the basis of integrated obstacle information output by a train 101 implementing sensor fusion, it is decided whether or not obstacle information needs to be updated (particularly, removed), and update information of obstacle information that needs to be updated is transmitted to the ground apparatus 103. Then, the ground apparatus 103 having received the update information updates (removes) obstacle information of the entire area that the ground apparatus 103 retains, on the basis of the received update information. Hereinafter, in the present embodiment, configurations similar to their counterparts in the first embodiment are given the same numbers, and explanations thereof are omitted.

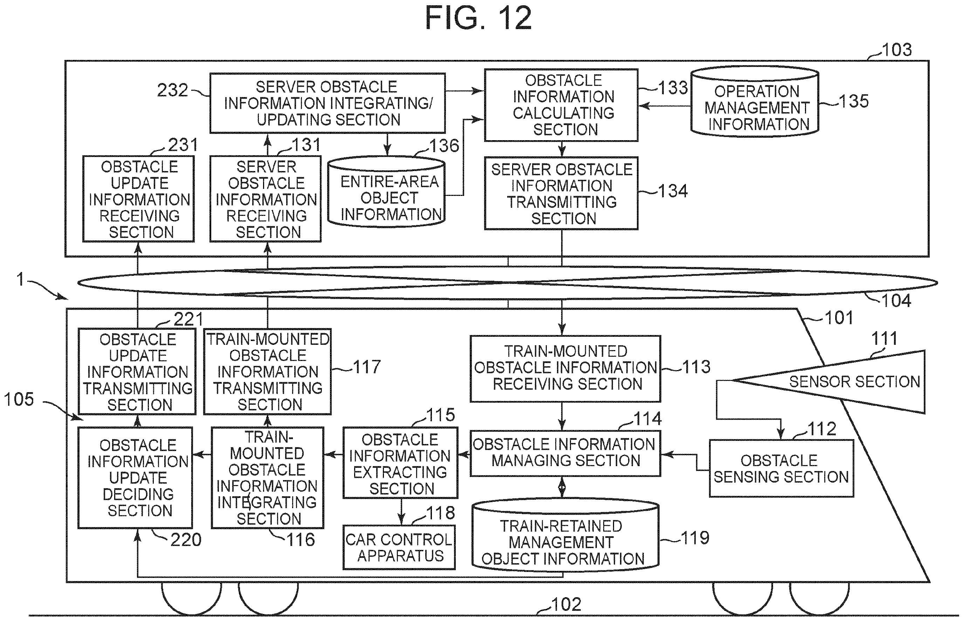

Fig. 12 is a figure depicting the functional configuration of the train control system 1 according to the second embodiment.

In addition to the configuration in the first embodiment mentioned above, the train control apparatus 105 of the present embodiment has an obstacle information update deciding section 220, and an obstacle update information transmitting section 221.

The obstacle information update deciding section 220 receives obstacle information output by the train-mounted obstacle information integrating section 116, and, on the basis of each piece of the obstacle information, decides whether or not there is an update of entire-area obstacle information retained in the entire-area object information 136 retained by the ground apparatus 103. The obstacle update information transmitting section 221 transmits, to the ground apparatus 103, update information of each piece of the obstacle information received from the obstacle information update deciding section 220.

In addition, the ground apparatus 103 in the present embodiment has an obstacle update information receiving section 231, and a server obstacle information integrating/updating section 232.

The obstacle update information receiving section 231 receives the update information of the entire-area obstacle information received from the train 101, and transmits the update information to the server obstacle information integrating/updating section 232. On the basis of the received update information of the entire-area obstacle information, the server obstacle information integrating/updating section 232 implements a process of updating the entire-area obstacle information 1361 retained in the entire-area object information 136.

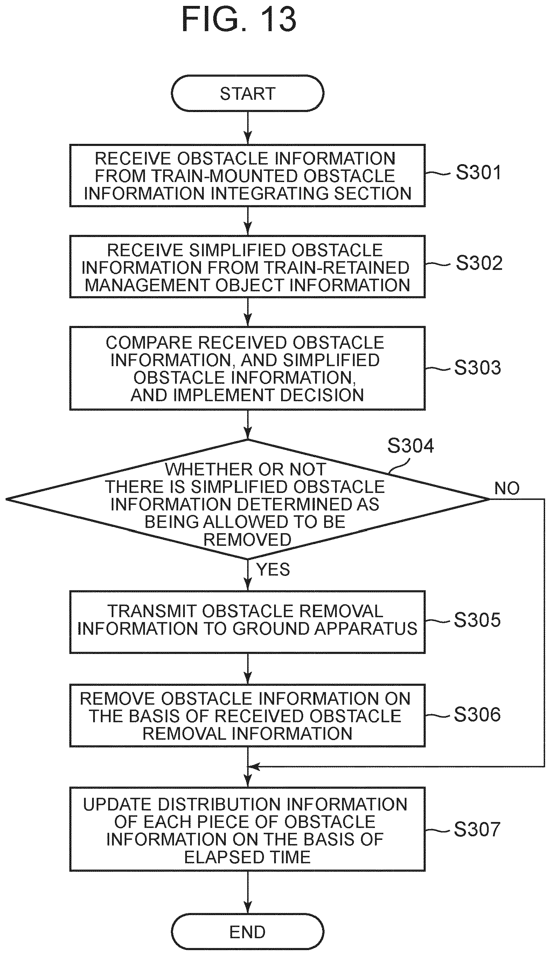

Fig. 13 is a flowchart depicting an example of operation of the train control system 1 according to the second embodiment. The flowchart depicted in Fig. 13 depicts a procedure of updating the entire-area obstacle information implemented by the train control apparatus 105, and the ground apparatus 103 in the second embodiment.

First, the obstacle information update deciding section 220 receives obstacle information from the train-mounted obstacle information integrating section 116 (S301), and also acquires simplified obstacle information that is retained in the train-retained management object information 119, and received from the ground apparatus 103 (S302).

The obstacle information update deciding section 220 having received the obstacle information, and the simplified obstacle information compares the obstacle information, and the simplified obstacle information, and, in a case that it can be determined that the train 101 could identify an obstacle related to the simplified obstacle information on the basis of the obstacle information, decides that the relevant simplified obstacle information is information that can be removed, and creates obstacle removal information (S303).

Then, the obstacle information update deciding section 220 checks whether or not there is simplified obstacle information that has been decided as being allowed to be removed (S304), and, in a case that there is simplified obstacle information decided as being allowed to be removed (YES at S303), the obstacle update information transmitting section 221 transmits the obstacle removal information created at S303 to the ground apparatus 103 (S305).

The server obstacle information integrating/updating section 232 having received the obstacle removal information through the obstacle update information receiving section 231 removes the obstacle information from the entire-area obstacle information 1361 retained in the entire-area object information 136 on the basis of the obstacle removal information (S306), and also updates distribution information of the entire-area obstacle information 1361 on the basis of the elapsed time.

On the other hand, in a case that there is no simplified obstacle information decided as being allowed to be removed (NO at S304), the process is ended.

Accordingly, the train control system 1 of the present embodiment also can provide advantages similar to those of the train control system 1 in the first embodiment mentioned above.

Additionally, in a case that the train control apparatus 105 of the subject train 101 determines the simplified obstacle information received from the ground apparatus 103 does not influence running, the running is continued, and also transmits, to the ground apparatus 103, a request for updating the obstacle information (lowering the degree of reliability (increasing the variance value), updating the information to the latest information). Thereby, the reliability of the obstacle information to be applied to sensor fusion can be enhanced, and so the obstacle sensing precision can be enhanced.

Note that the present invention is not limited to the embodiments described above, but includes various modification examples. For example, the embodiments described above are explained in detail in order to explain the present invention in an easy-to-understand manner, and the present invention is not necessarily limited to embodiments including all the configurations explained. In addition, it is possible to replace some of the configurations of an embodiment with configurations of another embodiment, and it is also possible to add a configuration of an embodiment to the configurations of another embodiment. In addition, some of the configurations of each embodiment can additionally have another configuration, can be removed or can be replaced with another configuration.

In addition, some or all of the configurations, functionalities, processing sections, processing means or the like described above may be realized by hardware by, for example, designing them in an integrated circuit, and so on. In addition, the configurations, functionalities or the like described above may be realized by software by a processor interpreting, and executing a program to realize the respective functionalities. Information such as a program, a table or a file to realize each functionality can be placed on a memory, a recording apparatus such as a hard disk or an SSD, or a recording medium such as an IC card, an SD card or a DVD.

In addition, control lines and information lines that are considered to be necessary for explanation are depicted, and it is not always the case that all control lines and information lines that are necessary for products are depicted. It may be considered that actually almost all configurations are connected mutually.

### List of Reference Signs

- 1:: Train control system
- 101:: Train
- 103:: Ground apparatus
- 105:: Train control apparatus
- 111:: Sensor section
- 112:: Obstacle sensing section
- 113:: Train-mounted obstacle information receiving section
- 114:: Obstacle information managing section
- 115:: Obstacle information extracting section
- 116:: Train-mounted obstacle information integrating section
- 117:: Train-mounted obstacle information transmitting section
- 118:: Car control apparatus
- 119:: Train-retained management object information
- 131:: Server obstacle information receiving section
- 132:: Server obstacle information integrating section
- 133:: Obstacle information calculating section
- 134:: Server obstacle information transmitting section
- 135:: Operation management information
- 136:: Entire-area object information
- 220:: Obstacle information update deciding section
- 221:: Obstacle update information transmitting section
- 231:: Obstacle update information receiving section
- 232:: Server obstacle information integrating/updating section
- 1121:: On-track running position specifying section
- 1122:: To-be-applied obstacle information extracting section
- 1123:: Running switch deciding section
- 1124:: Obstacle information format converting section
- 1191:: Obstacle information (first obstacle information)
- 1192:: Simplified obstacle information (second obstacle information)
- 1331:: Obstacle information conversion necessity deciding section
- 1332:: Route information specifying section
- 1333:: One-dimensional information converting section
- 1361:: Entire-area obstacle information
- 1362:: Importance information

## Claims

1. A train control system comprising:
a train control apparatus that is mounted on a train, and is configured to be able to communicate with an external apparatus located outside the train, wherein
the train control apparatus
senses presence of an obstacle present at least around the train, and acquires first obstacle information related to the obstacle;
manages the first obstacle information in a first format, and also manages second obstacle information related to the obstacle that is acquired from the external apparatus, and is in a second format with an information amount smaller than the first format; and
converts the second obstacle information in the second format into the first format, and senses the obstacle on a basis of the converted second obstacle information, and the first obstacle information.

2. The train control system according to claim 1, wherein the train control apparatus controls running of the train on a basis of a result of sensing of the obstacle based on the converted second obstacle information, and the first obstacle information.

3. The train control system according to claim 1, wherein the external apparatus converts the first obstacle information in the first format into the second format, and transmits the converted first obstacle information to the train control apparatus.

4. The train control system according to claim 3, wherein the external apparatus calculates importance of the first obstacle information, converts the first obstacle information in the first format having the importance which is equal to or lower than a predetermined threshold into the second format, and transmits the converted first obstacle information to the train control apparatus.

5. The train control system according to claim 1, wherein the train control apparatus specifies a running position of the train, and, on a basis of the running position, decides first obstacle information, and second obstacle information to be used as a premise of a sensing target in the first obstacle information, and the second obstacle information.

6. The train control system according to claim 1, wherein the first format is a format with two dimensions, and the second format is a format with one dimension along a running direction of the train.

7. The train control system according to claim 1, wherein, on a basis of the first obstacle information, the train control apparatus determines whether or not the obstacle based on the second obstacle information influences running control of the train, and, in a case that it is determined that the obstacle does not influence the running control of the train, sends, to the external apparatus, obstacle removal information for requesting to remove the second obstacle information related to the obstacle determined to not influence the running control of the train.

8. The train control system according to claim 1, wherein the external apparatus is another train control apparatus.

9. A train control system comprising:
a train control apparatus that is mounted on a train, and is configured to be able to communicate with an external apparatus located outside the train, wherein
the train control apparatus
senses presence of an obstacle present at least around the train, and acquires first obstacle information related to the obstacle; and
calculates a probability of presence of the obstacle on a basis of second obstacle information related to the obstacle acquired from the external apparatus, and senses the obstacle on a basis of the first obstacle information, and the probability of presence.

10. A computer program executed by a computer that is mounted on a train, and is configured to be able to communicate with an external apparatus located outside the train, the computer program realizing:
a functionality of sensing presence of an obstacle present at least around the train, and acquiring first obstacle information related to the obstacle;
a functionality of managing the first obstacle information in a first format, and also managing second obstacle information related to the obstacle that is acquired from the external apparatus, and is in a second format with an information amount smaller than the first format; and
a functionality of converting the second obstacle information in the second format into the first format, and sensing the obstacle on a basis of the converted second obstacle information, and the first obstacle information.

11. A computer program executed by a computer that is provided outside a train, and is configured to be able to communicate with the train, the computer program realizing:
a functionality of receiving first obstacle information related to an obstacle that is detected by the train, and is present around the train, and manages the first obstacle information as second obstacle information that is in a first format; and
a functionality of converting the second obstacle information into a second format with an information amount smaller than the first format, and transmits the converted second obstacle information to the train.
